# EUROPEAN PATENT SPECIFICATION

(11) **EP 0 977 061 B1**
(45) Date of publication and mention of the grant of the patent: **13.09.2006**
(21) Application number: 99114254.8
(22) Date of filing: 28.07.1999
(51) Int. Cl.: G02B 6/136, G02B 6/42

(54) **Optical waveguide device and method of producing the same**
Optische Wellenleitervorrichtung und deren Herstellungsverfahren
Dispositif à guide d'onde optique et sa méthode de fabrication

(30) Priority: 28.07.1998 JP 21222898
(43) Date of publication of application: 02.02.2000
(73) Proprietor: JAPAN AVIATION ELECTRONICS INDUSTRY, LIMITED, Shibuya-ku, Tokyo 150-0043 (JP)
(72) Inventor: Miyashita, Takuya, Japan Aviation Electr. Ind.,Ltd, Tokyo 150-0043 (JP); Ukechi, Mitsuo, Japan Aviation Electr. Ind., Ltd., Tokyo 150-0043 (JP); Kaku, Ryoji, c/o Japan Aviation Electr. Ind., Ltd., Tokyo 150-0043 (JP)
(74) Representative: Hoffmann, Eckart

(56) References cited:
- EP-A- 0 548 440
- EP-A- 0 649 039
- EP-A- 0 864 893
- US-A- 5 600 745
- US-A- 5 611 008
- PATENT ABSTRACTS OF JAPAN vol. 013, no. 499 (P-957), 10 November 1989 (1989-11-10) & JP 01 200307 A (NIPPON TELEGR & TELEPH CORP), 11 August 1989 (1989-08-11)

## Description

### BACKGROUND OF THE INVENTION

This invention relates to an optical waveguide device and a method of producing the same, and more particularly, to an optical waveguide device which allows for easily adjusting and aligning silicon substrates and an optical waveguide substrate with each other in their optimal relative positional relationship by passive alignment and a method of producing the same.

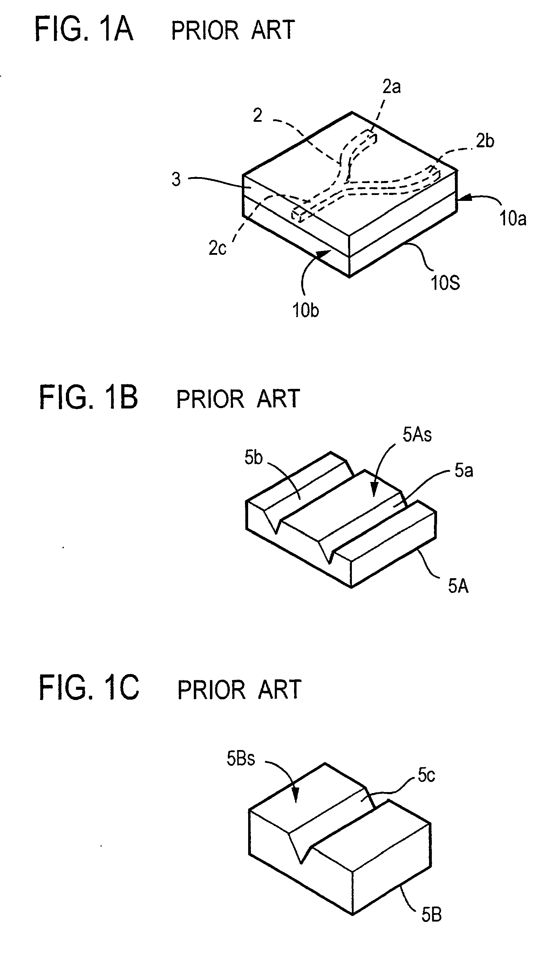

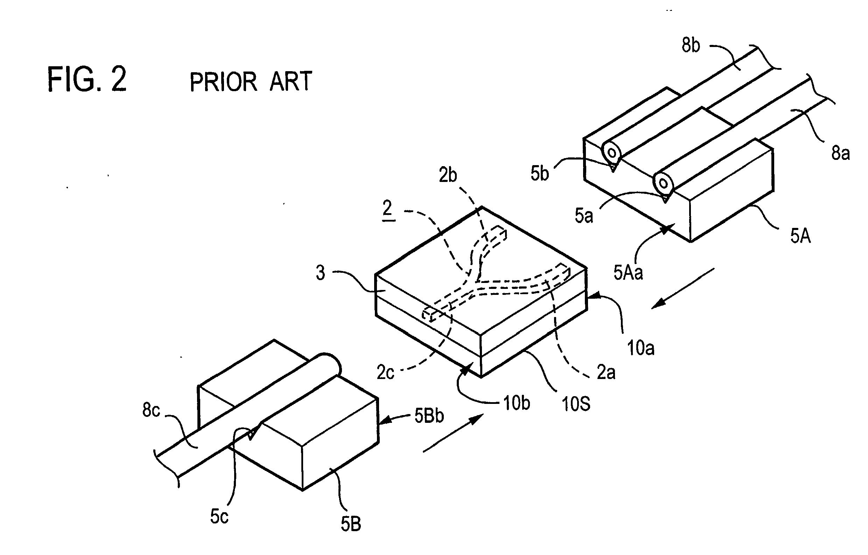

An example of the prior art will be described below with reference to Figs. 1A, 1B, 1C and 2.

In Fig. 1A, formed on one side surface of a generally rectangular optical waveguide substrate 10S as cut out of a silicon crystal, for example is a clad layer 3 in which a Y-shaped optical waveguide 2 is embedded. The branch passages 2a and 2b of the optical waveguide 2 terminate in end faces intersecting with one end surface of the optical waveguide substrate 10S while the branch passage 2c of the optical waveguide 2 terminates in an end face intersecting with the opposite end surface of the optical waveguide substrate 10S.

Referring to Fig. 1B, a generally rectangular V-grooved substrate 5A formed of silicon has formed in its surface 5As two grooves 5a, 5b (which will be referred to as V groove hereinafter) having a V-shaped cross-section, the two grooves being parallel to each other and the side edges of the substrate 5A. On the other hand, another V-grooved substrate 5B shown in Fig. 1C has formed in its surface 5Bs a single V groove 5c parallel to the side edges of the substrate 5B. It is a known practice to form V grooves 5a, 5b, 5c by etching in the surfaces of the substrates 5A, 5B cut out of a silicon single crystal. As shown in Fig. 2, optical fibers 8a, 8b and 8c are positioned and fixed in the respective V grooves 5a, 5b and 5c of the V-grooved substrates 5A and 5B such that their end faces are flush with or protrude slightly beyond the end faces 5Aa and 5Ba of the corresponding V-grooved substrates 5A and 5B. The center-to center spacing between the two V grooves 5a and 5b is equal to that between the outer ends of the two branch passages 2a and 2b of the Y-shaped optical waveguide 2.

As noted above, the optical waveguide substrate 10S having the optical waveguide 2 formed therein and the V-grooved substrates 5A and 5B having the optical fibers 8a, 8b and 8c fixed thereto are separately manufactured, and then the V-grooved substrates 5A and 5B are translationally moved toward each other in the directions as indicated by the arrows in Fig. 2 by an alignment apparatus (not shown) such that the end faces of the optical fibers 8a, 8b and 8c are opposed to the end faces of the respective optical branch passages 2a, 2b and 2c while the substrates 5A and 5B are both transversely and vertically adjusted so that the centers of the cores of optical fibers 8a, 8b and 8c are brought into alignment with the centers of the ends of the corresponding branch passages 2a, 2b and 2c of the optical waveguide 2, whereafter the substrates are joined together as an integral unit. When joining the substrates together to form an integral unit, a ray of light is input into the optical fiber 8c fixed to the left-side V-grooved substrate 5B. The three substrates are adjusted to their optimal relative positional relationship while monitoring the amount of the light as it is input through the optical waveguide 2 of the optical waveguide 2 into the two optical fibers 8a, 8b fixed to the right-side V-grooved substrate 5B, prior to joining the substrates together in alignment with each other. It is known as active alignment to adjust the substrates to their optimal relative positional relationship while monitoring the amount of the light transmitted. Such active alignment, however, does not involve putting alignment marks on the optical waveguide substrate 10S and V-grooved substrates 5A, 5B to insure the exact relative positional relation.

An example of the conventional optical waveguide device is disclosed in Japanese Patent Publication 7-69497 for example. This prior art example also requires that the optical waveguide substrate and the silicon substrates formed with V grooves for fixing optical fibers be separately made and that the substrates are adjusted to their optimal relative positional relationship prior to bonding and securing the substrates together. It should be noted in this example, however, that alignment marks are put on the optical waveguide substrate while the corresponding reference marks are put on the silicon substrates to aid in adjusting the substrates to their optimal relative positional relationship. In adjusting the substrates to their optimal relative positional relationship, it is known as passive alignment to adjust their relative positional relationship in a simple manner with the aid of alignment marks and reference marks without monitoring the amount of the light transmitted.

As discussed above, the active alignment technique involving adjusting the substrates to their optimal relative positional relationship into alignment with each other while monitoring the amount of light transmitted is employed to assemble an optical waveguide device. While this method insures that the alignment process be accurately performed, it requires not only a complicated process of alignment to seek for the optimal position, but also a longer time to perform the process of alignment.

An optical waveguide device in accordance with the pre-characterizing portion of claim 1 is known from EP-A-0 649 039. A similar optical waveguide device is disclosed in EP-A-0 864 893 (prior art according to Art. 54(3) EPC).

### SUMMARY OF THE INVENTION

It is an object of this invention to provide an optical waveguide device which allows for easily adjusting and aligning device substrates and the optical waveguide substrate with each other in their optimal relative positional relationship by the use of the passive alignment technique rather than the active alignment technique and a method of producing the same.

This object is achieved by an optical waveguide device as claimed in claim 1 and a method of manufacturing it as claimed in claim 15. Preferred embodiments of the invention are subject-matter of the dependent claims.

### BRIEF DESCRIPTION OF THE DRAWINGS

Fig. 1A is a perspective view of the substrate of the conventional optical waveguide device having optical waveguide formed therein;
Fig. 1B is a perspective view of the V-grooved substrate for mounting two optical fibers in the conventional optical waveguide device;
Fig. 1C is a perspective view of the V-grooved substrate for mounting one optical fiber in the conventional optical waveguide device;
Fig. 2 is a perspective illustration illustrating the process of assembling the three substrates shown in Figs. 1A, 1B and 1C;
Fig. 3A is a perspective view of an optical waveguide and the substrate forming an optical waveguide splitter according to this invention;
Fig. 3B is a perspective view of the device substrate composed of two V-grooved substrate sections and a mount substrate section in the foregoing embodiment;
Fig. 3C is a perspective view of an embodiment of the invention in the form of an optical waveguide splitter as assembled;
Fig. 4A is a sketch illustrating the first step of forming alignment marks for the optical waveguide and the substrate;
Fig. 4B is a sketch illustrating the second step of forming alignment marks for the optical waveguide and the substrate;
Fig. 4C is a sketch illustrating the third step of forming alignment marks for the optical waveguide and the substrate;
Fig. 4D is a sketch illustrating the fourth step of forming alignment marks for the optical waveguide and the substrate;
Fig. 4E is a sketch illustrating the fifth step of forming alignment marks for the optical waveguide and the substrate;
Fig. 4F is a sketch illustrating the sixth step of forming alignment marks for the optical waveguide and the substrate;
Fig. 4G is a sketch illustrating the seventh step of forming alignment marks for the optical waveguide and the substrate;
Fig. 5A is a perspective view of an optical waveguide chip forming an optical transmission/receiving module in another embodiment of the invention;
Fig. 5B is a perspective view of the device substrate in the embodiment of Fig. 5A;
Fig. 6 is a perspective view of an optical transmission/receiving module formed by mounting the optical waveguide chip of Fig. 5A on the device substrate of Fig. 5B;
Fig. 7A is a perspective view of an optical waveguide chip constituting an optical transmission/receiving module in yet another embodiment of the invention;
Fig. 7B is a plan view of the optical waveguide chip shown in Fig. 7A;
Fig. 7C is a perspective view of the device substrate in the embodiment of Fig. 7A; and
Fig. 8 is a perspective view of an optical transmission/receiving module formed by assembling the optical waveguide chip of Fig. 7A and the device substrate of Fig. 7C.

### DETAILED DESCRIPTION OF THE PREFERRED EMBODIMENTS

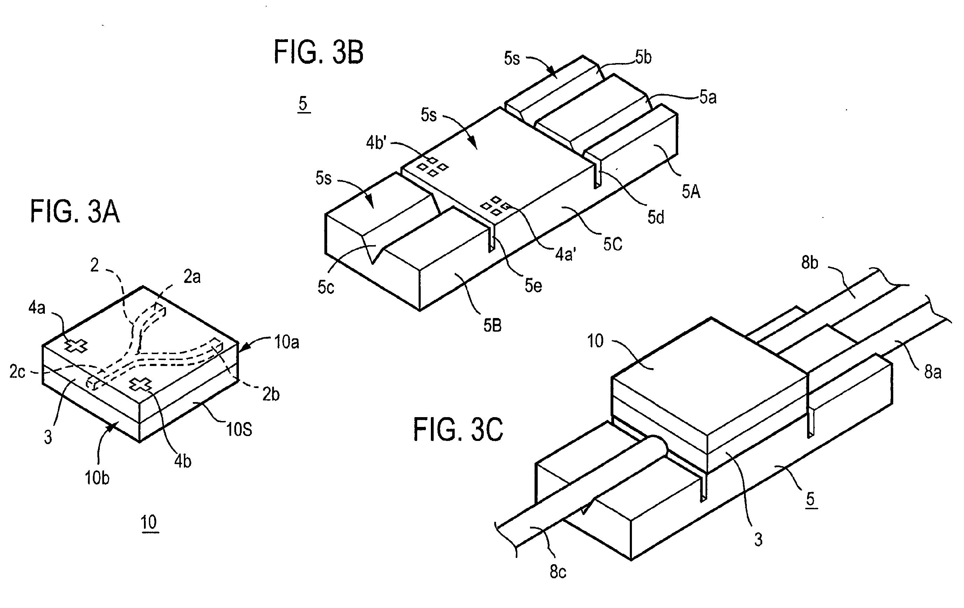

An embodiment of the invention be will be described below with reference to Figs. 3A, 3B and 3C. Figs. 3A and 3B are exploded perspective views of an optical waveguide splitter in the form of an optical waveguide device with optical fibers removed while Fig. 3C is a perspective view of the optical waveguide splitter assembled with optical fibers.

As shown in Fig. 3A, a clad layer 3 and a Y-shaped optical waveguide 2 including branch passages 2a, 2b and 2c therein are formed by the known etching technique and film forming technique on the surface of a generally rectangular optical waveguide substrate 10S cut out of a silicon single crystal to constitute an optical waveguide chip 10. Additionally, alignment marks 4a, 4b are formed on or in the clad layer 3 on the opposite sides of the branch passage 2a toward the end surface 10b of the substrate 10S. The end faces of the branch passages 2a, 2b lie in one end surface 10a of the substrate 10S while the end face of the branch passage 2c lies in the end surface 10b of the substrate 10S opposite from the one end surface.

As shown in Fig. 3B, a generally rectangular device substrate 5 cut out of a silicon single crystal is formed with two spaced apart dicing grooves 5d, 5e extending perpendicularly to the length of the device substrate 5 so as to divide the surface thereof into three regions to thereby define two V-grooved substrate sections 5A, 5B separated by a mount substrate section 5C. It is thus to be appreciated that the top surfaces (three regions) of the substrate sections 5A, 5B and 5C lie in the same plane which will hereinafter be defined as a reference plane 5s. The dicing grooves 5d, 5e are preliminarily formed to insure that the V grooves 5a, 5b and 5c which will be subsequently formed by etching will have no insufficiently etched shallow portions adjacent their inner ends. Two grooves 5a, 5b (V grooves) having a V-shaped cross-section and one V groove 5c are formed on the surfaces of the V-grooved substrate sections 5A and 5B, respectively by the known etching technique so as to extend from the opposite longitudinal ends of the device substrate 5 perpendicularly into communication with the dicing grooves 5d and 5e. In addition, alignment marks 4a', 4b' are formed on the surface of the mount substrate section 5C.

Then, the optical waveguide chip 10 is turned upside down and placed on the mount substrate section 5C. The optical waveguide chip 10 is precisely positioned relative to the V-grooved substrate sections 5A, 5B such that the alignment marks 4a', 4b' on the mount substrate section 5C are superposed in registration on the corresponding alignment marks 4a, 4b on the optical waveguide substrate 10S, followed by bonding the optical waveguide chip to the waveguide substrate 10S. Subsequently, optical fibers 8a, 8b and 8c are attached to the corresponding V grooves 5a, 5b and 5c such that the end faces of the fibers are opposed to the end faces of the respective optical branch passages 2a, 2b and 2c comprising the optical waveguide 2 to construct an optical waveguide device as shown in Fig. 3C. It is to be understood that this allows for constructing an optical waveguide device in which the center of the optical fibers 8 is in accurate alignment with the center of the optical waveguide 2.

The positional relationship between the centers of the optical branch passages 2a, 2b, 2c and the alignment marks 4a, 4b is preliminarily set with high precision, and the positional relationship between the centers of the alignment marks 4a', 4b' and the V grooves 5a, 5b and 5c is preliminarily set with high precision to insure accurate alignment between the centers of the ends of the optical branch passages 2a, 2b, 2c and the centers of the optical fibers 8a, 8b and 8c fixed to the V grooves 5a, 5b and 5c. The optical fibers have a uniform diameter while the V grooves have a uniform opening angle, so that the height of the center of each optical fiber above the substrate reference plane 5s can be set at any height between a positive value less than the radius of the optical fiber and a negative value.

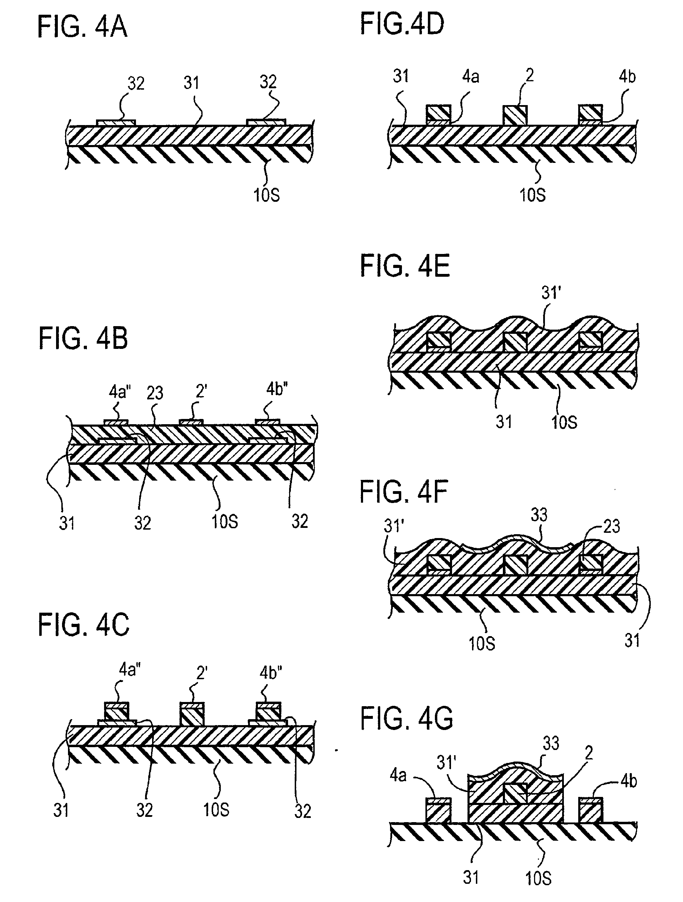

The sequential steps of manufacturing the optical waveguide chip 10 will now be described with reference to Figs. 4A-4G.

In the step shown in Fig. 4A, an under-clad layer 31 is formed on the surface of an optical waveguide substrate 10S cut out of a silicon single crystal. Polyimide may be used as an example of the material of which the under-clad layer 31 may be formed. The polyimide layer may be prepared by mixing a plurality of kinds of polyimide solutions in appropriate proportions and applying the mixture to the substrate prior to calcining it. While the thickness of the under-clad layer 31 is exaggerated for purposes of illustration, actually it is extremely thin such as on the order of 15 µm together with an over-clad layer 31' which will be described later. Metallic films 32 which are subsequently to be alignment marks 4 are formed on the surface of the under-clad layer 31 at predetermined positions. Titanium or CrAu may be used by way of example for the material of which the metallic films 32 may be formed.

In Fig. 4B, a layer 23 of polymeric material which is subsequently to be an optical waveguide 2 is formed on the entire surface of the under-clad layer 31 containing the metallic films 32. While specifically the polymeric material layer 23 may also be formed from polyimide, it is of such composition that it will exhibit a refractive index higher than that of the under-clad layer 31 and the thickness of the layer may be on the order of 7 µm by way of example. A pattern 2', 4a'', 4b'' for the optical waveguide 2 and the alignment marks 4a, 4b is formed on the surface of the polymeric material layer 23.

In the step of Fig. 4C, the polymeric material layer 23 is removed by the reactive ion etching technique (RIE). The reactive ion etching RIE does not act on the metallic films 32.

The step shown in Fig. 4D is to remove the remaining pattern 2' and 4a'', 4b'' which are metallic films and those portions of the metallic films 32 which are exposed, whereby the optical waveguide 2 and the alignment marks 4a, 4b both made of polymeric material are produced.

In the step of Fig. 4E, an over-clad layer 31' is formed over the entire surface of the under-clad layer 31 containing the patterns formed. The material for the over-clad layer 31' is of the same composition as the material of which the under-clad layer 31 is formed, such as polyimide. The over-clad layer 31' may be prepared by mixing a plurality of kinds of polyimide solutions in appropriate proportions and applying the mixture to the surface followed by calcining it. The over-clad layer 31' together with the under-clad layer 31 forms a clad layer 3 which surrounds the optical waveguide 2 and which has a refractive index lower than that of the optical waveguide 2.

In the further step shown in Fig. 4F, a Y-shaped pattern of metallic film 33 is formed to cover the optical waveguide 2 (optical branch passages 2a, 2b, 2c) on the over-clad layer 31'.

In the step of Fig. 4G, those portions of the over-clad layer 31' other than those portions underlying the metallic film 33, and the under-clad layer 31 and those portions of the polymeric material layer 23 over the alignment marks 4a, 4b are removed by RIE to expose the surfaces of the alignment marks and the optical waveguide substrate 10S. The over-clad layer 31' remaining underneath the metallic film 33 and the under-clad layer 31 correspond to the clad layer 3.

While the metallic film 33 is illustrated as remaining in Fig. 4G, it may be and usually is removed. In addition while in the example of Figs. 4A-4G the pattern of the over-clad layer 31' is illustrated as being in the shape of Y so as to conform with the Y-shaped optical waveguide 2, the over-clad layer 31' may remain as formed over the entire surface of the substrate 10S as shown in Fig. 3A. In that case, the steps of Figs. 4F and 4G are omitted.

As can be appreciated from the foregoing, the relative positional relationship between the optical waveguide 2 and the alignment marks 4a, 4b may be accurately defined by forming the optical waveguide 2 and the alignment marks 4a, 4b in a single masking pattern (pattern 2', 4a'', 4b'' in Figs. 4B and 4C). A high precision alignment can thus be realized. In consideration of the requirement that the alignment marks 4 which are metallic films be neither vaporized nor oxidized when forming the layer 23 which will be an optical waveguide 2, the material of which the layer 23 is formed may preferably be a polymeric material which can be worked on at a low processing temperature below 400 °C. In this regard, it should be noted that if an attempt is made to form an optical waveguide from quartz by flame deposition process, such waveguide could not be allowed to remain normally on the under-clad layer 31 because the processing temperature of quartz exceeds 1000 °C. It is a matter of course that the material of which the under-clad layer 31 is formed would also be burned out at such a high processing temperature as 1000 °C.

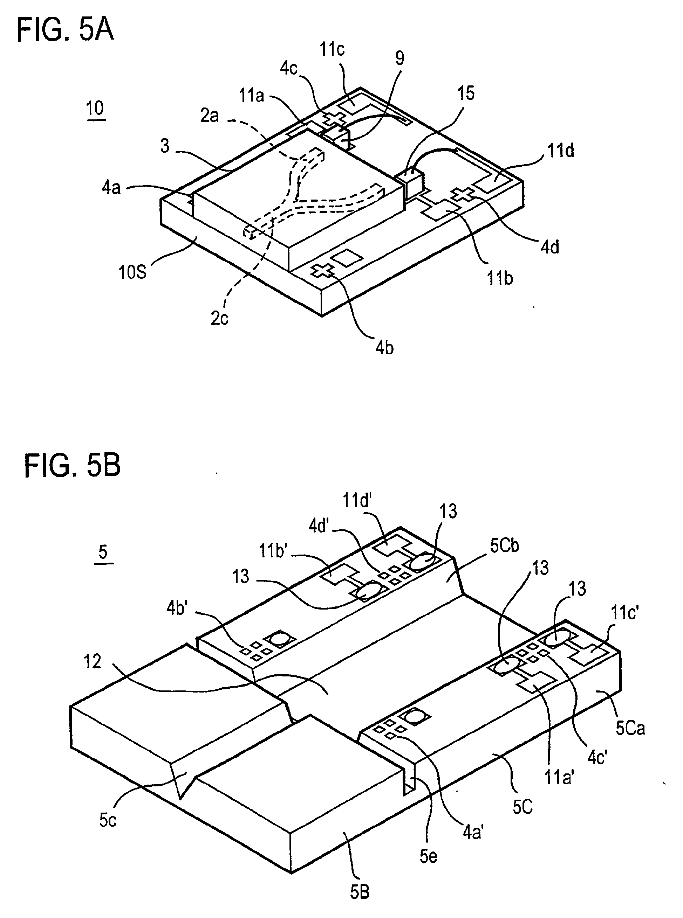

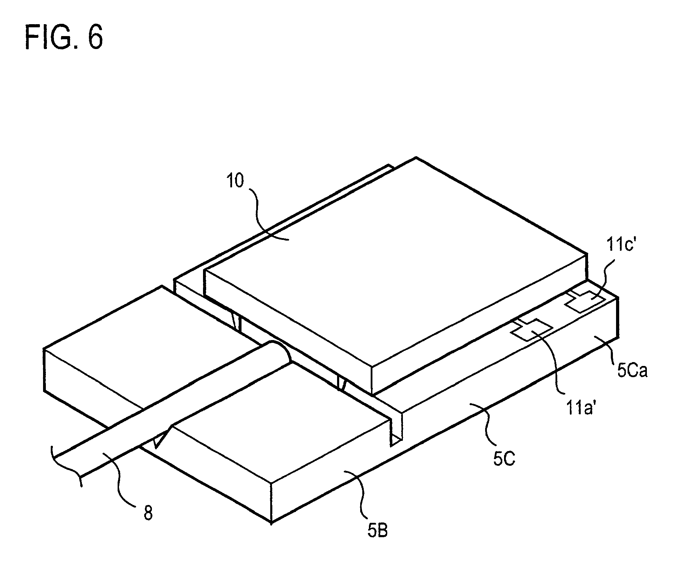

Referring to Figs. 5A, 5B and Fig. 6, an optical transmission/receiving module in another embodiment of the optical waveguide device according to this invention will be described below.

First with reference to Fig. 5A, in this embodiment a clad layer 3 is formed on an optical waveguide substrate 10S which is greater both in width and length than the clad layer with one end surface of the clad layer flush with one end surface of the substrate 10S such that marginal areas are left on the substrate on the other opposite end and on the opposite sides of the clad layer 3. An end face of the optical branch passage 2a lies in the middle of the end surface of the clad layer 3 flush with the one end surface of the optical waveguide substrate 10S while the end faces of the branch passages 2a, 2b lie in the opposite end surface of the clad layer. In this embodiment, a laser diode 9 and a photo diode 15 are disposed in opposition to the end faces of the branch passages 2a and 2b, respectively with their one electrodes placed on electrodes 11a and 11b, respectively formed on substrate 10S. Alignment marks 4a, 4b, 4c and 4d are formed on the substrate 10S at four corners of an area surrounding the arrangement of the clad layer 3, laser diode 9 and photo diode 15. Further formed on the substrate 10S outside of the alignment marks 4c and 4d are electrodes 11c and 11d which are wire-bonded to the other terminals of the laser diode 9 and photo diode 15, respectively.

Each of the electrodes 11a and 11b is in the shape of H comprising two lands interconnected by a bridge with one of the lands positioned inside of an imaginary extension of the corresponding one of the opposite side edges of the clad layer 3 while the other land is positioned outside of an imaginary extension of the corresponding one of the opposite side edges of the clad layer 3. Placed on and connected with the inner lands of the electrodes 11a and 11b are the laser diode 9 and photo diode 15. The lands of the electrodes 11c and 11d are positioned outside of the imaginary extensions of the opposite side edges of the clad layer 3 and have leads extending therefrom toward inside of the imaginary extensions. It can thus be appreciated that the positional relationship between the various parts attached and formed on the optical waveguide substrate 10S and the alignment marks 4a-4b may be accurately set and defined.

Next referring to Fig. 5B, a generally rectangular substrate 5, which is greater both in width and length than the optical waveguide substrate 10S, is formed in its top surface with a dicing groove 5e extending transversely of the length of the substrate 5 so as to divide the length thereof into two sections to thereby define a mount substrate section 5C and a V-grooved substrate section 5B. As in the case of Fig. 3B, the V-grooved substrate section 5B has formed therein a V groove 5c extending from the center of the end face thereof into communication with the dicing groove 5e. The mount substrate section 5C has formed in its top surface a recess 12 extending from the end face of the section opposite from the dicing groove 5e into communication with the dicing groove 5e so as to leave banks 5Ca, 5Cb on the opposite sides of the recess. The width of the recess 12 is sized to accommodate the clad layer 3. Formed on the top surfaces of the banks 5Ca, 5Cb are alignment marks 4a', 4b', 4c' and 4d' in correspondence with the alignment marks 4a, 4b, 4c and 4d shown in Fig. 5A. Further formed on the top surfaces of the banks 5Ca, 5Cb are H-shaped electrodes 11a', 11b', 11c' and 11d' having inner lands which will underlie the substrate 10S and outer lands which will be positioned outside of the substrate. The inner lands have solder bumps 13 formed thereon. In assembly, the clad layer 3 and the laser diode 9 and photo diode 15 protruding from the surface of the optical waveguide substrate 10S are all accommodated in the recess 12.

After the laser diode 9 and photo diode 15 have been mounted on the optical waveguide substrate 10S as described above with reference to Fig. 5A, the resulting optical waveguide chip 10 is turned upside down and placed in position on the mount substrate section 5C described in Fig. 5B with reference to the alignment marks 4a'- 4d' to form an assembly as shown in Fig. 6. Then, the entire assembly is heated while the substrate 10S is pressed against the mount substrate section 5C to bond them together by means of the solder bumps 13. Further, gaps (recess 12) between the optical waveguide chip 10 and the mount substrate section 5C is filled with resin to protect the mounted laser diode 9 and photo diode 15.

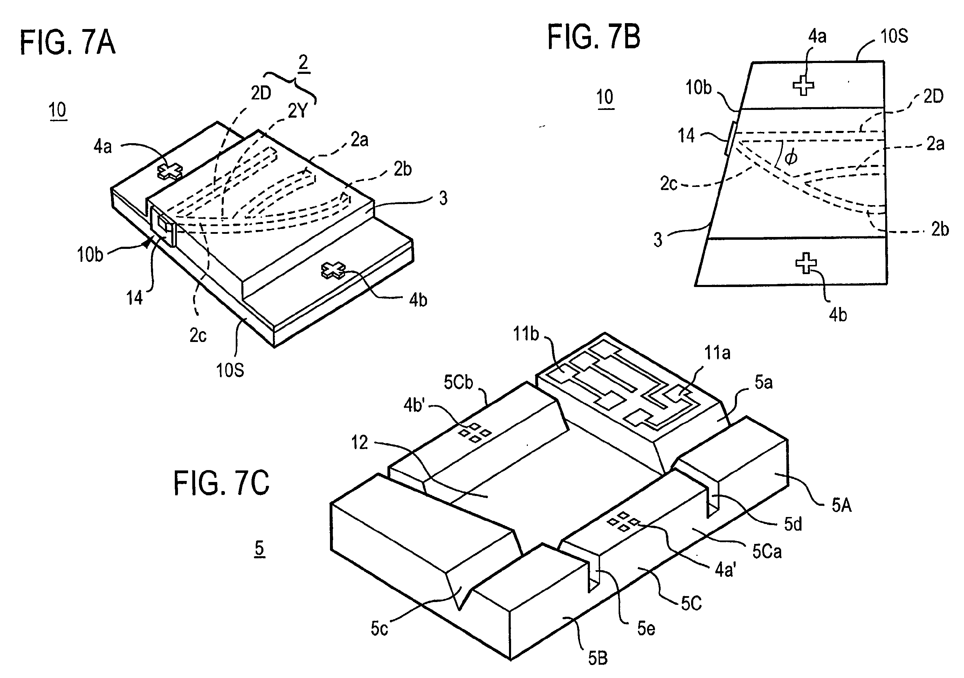

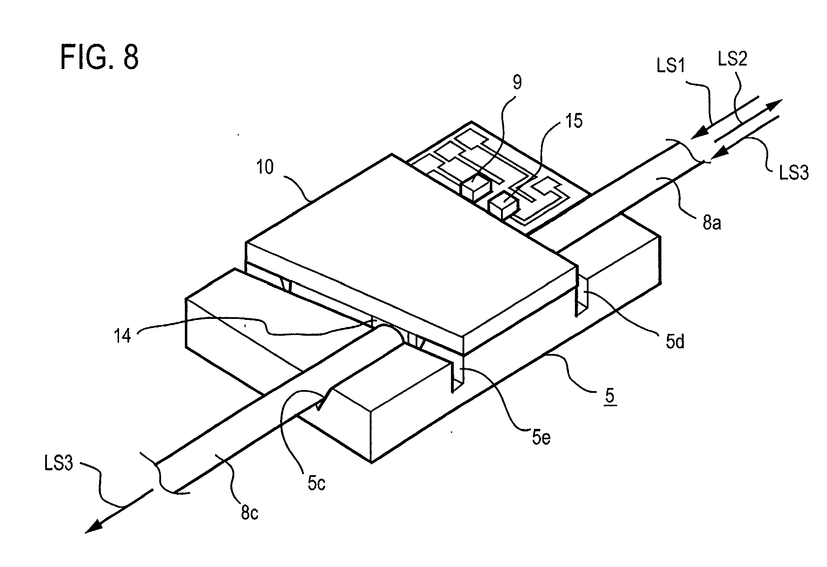

Referring now to Figs. 7A, 7B, 7C and Fig. 8, an optical transmission/receiving module in still another embodiment of the optical waveguide device according to this invention will be described below.

In the art of optical communication, plans are now afoot to provide both bi-directional digital communications via signal light with a wavelength of 1.31 µm and analog picture broadcasting via signal light with a wavelength of 1.55 µm in a single optical fiber. In this instance, a terminal equipment designed to utilize such signal lights would need a bi-directional communication module capable of separating the signal lights of two wavelengths of 1.31 µm and 1.55 µm through a filter prior to introducing the signal light of 1.31 µm into both of the laser diode 9 and photo diode 15 while introducing the signal light of 1.55 µm into a picture receiver (not shown).

In the embodiment of Figs. 7A, 7B, 7C and Fig. 8, a single silicon substrate 5 is divided into three regions, a central mount substrate section 5C and two V-grooved substrate sections 5A, 5B on the opposite sides of the mount substrate section 5C as in the embodiment of Figs. 3A, 3B, 3C. The mount substrate section 5C has formed by etching in its top surface a recess 12 extending from the dicing groove 5d into communication with the dicing groove 5e so as to define banks 5Ca, 5Cb on the opposite sides of the recess like the embodiment of Fig. 5B. The V-grooved substrate section 5A is formed with a V groove 5a and may have formed on the top surface thereof electrodes 11a, 11b on which optical-electronic elements (such as laser diode 9 and photo diode 15) may be mounted.

Now with reference to Fig. 7A, a clad layer 3 having an optical waveguide 2 embedded therein is formed on an optical waveguide substrate 10S. The optical waveguide 2 in this embodiment comprises a straight optical waveguide path 2D for transmitting signal light of a wavelength of 1.31 µm and signal light of a wavelength of 1.55 µm and optical branch passages 2a, 2b, 2c constituting a Y-branched optical waveguide path 2Y for transmitting signal light of a wavelength of 1.31 µm. The ends of the straight optical waveguide path 2D and the optical branch passage 2c are coupled together, the coupled end face lying in the end surface 10b of the clad layer 3. Formed on the end surface 10b of the clad layer 3 over the coupled end face is a dielectric multi-layer film filter 14 allowing the passage of the signal light of a wavelength of 1.31 µm but reflecting the signal light of a wavelength of 1.55 µm. It is seen in Fig. 7B which is a top plan view of the optical waveguide chip 10 that the end surface 10b of the clad layer 3 with which the coupled end face intersect is not at right angles but at an angle with respect to the straight optical waveguide path 2D so that the reflected light at the dielectric multi-layer film filter 14 may be introduced into the optical branch passage 2c. More specifically, the angle is chosen such that a line bisecting the angle defined at the coupled end between the straight optical waveguide path 2D and the optical branch passage 2c makes a right angle with the plane of the end surface 10b of the clad layer 3. The optical waveguide 2 and the alignment marks 4a, 4b may be formed by the same method as that described with reference to Figs. 4A-4G. It is to be noted that the fact that the optical waveguide 2 is formed on the optical waveguide substrate 10S separate from the device substrate 5 is a favorable factor in forming the dielectric multi-layer film filter 14 the end surface of the optical waveguide 2 and actually facilitates the formation of the filter.

Referring to Fig. 7C, the V-grooved substrate section 5A of the device substrate 5 is formed with a V groove 5a for receiving and securing an optical fiber 8a intersecting at right angles with the dicing groove 5d, and has formed on the top surface thereof electrodes 11a and 11b with which a photo diode 15 (Fig. 8) and a laser diode 9 (Fig. 8) may be connected. The direction of extension of the dicing groove 5e is angled at Φ/2 with respect to a direction perpendicular to the direction of extension of the V groove 5a such that the direction of extension of the groove 5e will coincide with the plane of the end surface 10b of the optical waveguide substrate 10S when the optical waveguide chip 10 is turned upside down and placed on the mount substrate section 5C. The V groove 5c is formed in the V-grooved substrate section 5B to extend such that it will coincide with the direction of extension of the V groove 5a.

The optical waveguide chip 10 shown in Fig. 7A is turned upside down and placed in position on the mount substrate section 5C shown in Fig. 7C with the waveguide chip and the mount substrate section being aligned with each other by superposing the alignment marks 4a, 4b on the optical waveguide chip 10 over the alignment marks 4a', 4b' on the mount substrate section 5C, followed by bonding the optical waveguide chip 10 and the substrate 5 together of form an integral assembly. In addition, optical fibers 8a and 8c are fitted and fixed in the V grooves 5a and 5b, respectively to form an optical transmission/receiving module as shown in Fig. 8.

In order to register the alignment marks 4a, 4b formed on the optical waveguide chip 10 and the alignment marks 4a', 4b' formed on the mount substrate section 5C while recognizing one against the other, a camera may be inserted between the opposed substrates to perform the alignment procedures while simultaneously observing the patterns of the opposed alignment marks. Alternatively, light having a high penetrating power such as infrared rays or X rays may be used to irradiate the alignment marks on the substrates so that the alignment process may be carried out by observing the transmitted light. The optical waveguide substrate 10S and the device substrate 5, which have actually extremely thin thickness on the order of 500 µm , permits easy transmission of infrared rays or X rays to allow the operator to fluoroscope the alignment marks. The positioning and alignment process as described above not only is very simple and easy but also requires only a short period time.

In the optical transmission/receiving module the assembly of which has been completed, the optical fibers 8a and 8c have their central axes in opposition to the centers of the end faces of the straight optical waveguide path 2D while the laser diode 9 and photo diode 15 are in opposition to the centers of the end faces of the respective branch passages of the Y-branched optical waveguide path 2Y.

With the construction as described above in connection with Figs. 7 and 8, signal light LS3 of a wavelength of 1.55 µm introduced through the optical fiber 8a on one side is passed into the straight optical waveguide path 2D, penetrates through the dielectric multi-layer film filter 14 and is output to the optical fiber 8c on the other side. In contrast, signal light LS1 of a wavelength of 1.31 µm introduced through the optical fiber 8a on one side is passed into the straight optical waveguide path 2D and reflected at the dielectric multi-layer film filter 14 to be introduced into the Y-branched optical waveguide path 2Y and is received by the photo diode 15 positioned in opposition to the end face of the optical branch passage 2a. Signal light LS2 of a wavelength of 1.31 µm transmitted from the laser diode 9 is introduced into the optical branch passage 2c through the end face of the optical branch passage 2b opposing the laser diode 9, is reflected at the dielectric multi-layer film filter 14 to be introduced into the straight optical waveguide path 2D and is then output to the optical fiber 8a on the one side. It will thus be appreciated that this invention allows for both providing bi-directional digital communications via signal light of a wavelength of 1.31 µm and by passing signal light of a wavelength of 1.55 µm in a single optical fiber.

### EFFECTS OF THE INVENTION

From the foregoing description, it can be seen that this invention involves forming on a substrate of raw material an optical waveguide embedded in a clad layer and alignment marks by utilization of etching and film forming techniques to constitute an optical waveguide chip, forming on a substrate of raw material V grooves and alignment marks by utilization of etching and film forming techniques to constitute a device substrate, whereby positioning and securing of the optical waveguide chip and the device substrate relative to each other may be effected easily and accurately by referring to the alignment marks on the chip and the substrate. In spite of the fact that the alignment operation according to this invention is based on the so-called passive alignment technique, the accuracy in positioning and alignment is comparable to that obtainable by the active alignment technique, and yet the positioning and aligning process of this invention not only is simple and easy, but also requires only a short period time.

## Claims

1. An optical waveguide device comprising,
a device substrate (5) having a first region (5B) and a second region (5C) defined on the top surface thereof, said first and second regions being arranged in side-by-side juxtaposition from one end of said device substrate (5), said first region (5B) being formed with a V groove (5c) extending from said one end of said device substrate (5) to a boundary between said first and second regions, and said second region (5C) having at least two first alignment marks (4a', 4b') formed at at least two spaced apart locations on the second region (5C);
an optical waveguide chip (10) comprising an optical waveguide substrate (10S) having a first end surface (10a) and a second end surface (10b), a clad layer (3) formed over one side surface of said optical waveguide substrate (10S) and having one end edge flush with the first end surface of the optical waveguide substrate (10S), an optical waveguide (2) formed in said clad layer (3) and extending from said one end edge to the other end edge of the clad layer(3), and at least two second alignment marks (4a, 4b) formed on said optical waveguide substrate (10S) at at least two locations spaced from each other and spaced from said optical waveguide (2); and
an optical fiber (8c) fitted and secured in said V groove (5c) and terminating in one end intersecting with said boundary between said first and second regions with the other end protruding from said device substrate (5);
wherein said optical waveguide chip (10) is mounted on said device substrate (5) such that said clad layer(3) lies on the second region (5C) of said device substrate (5), the locations of said first and second alignment marks being defined such that superposing the first and second alignment marks one on the other will put one end face of said optical fiber (8c) into opposed alignment with one end of said optical waveguide (2);
**characterized in that**:
wherein said optical waveguide (2) includes a first optical waveguide path (2D) and a second optical waveguide path (2Y) extending from said one end edge toward said other end edge of the clad layer. (3), said first and second optical waveguide paths being coupled together at said one end edge of the clad layer (3) into a coupled end which constitutes said one end of said optical waveguide (2), said first and second optical waveguide paths having other ends spaced apart from each other and intersecting with said other end edge of the clad layer(3), and further including a dielectric multi-layer film filter (14) formed on the one end edge of the clad layer (3) so as to cover said coupled end, said dielectric multi-layer film filter (14) allowing passage of light of a first wavelength but reflecting light of a second wavelength, said one end edge of the clad layer (3) being at right angle to a line bisecting an angle defined at the coupled end between said first and second optical waveguide paths.

2. The device of claim 1, wherein said second optical waveguide path (2Y) is formed as a Y-branched optical waveguide path comprising one optical branch passage (2c) terminating in an end intersecting with said one end edge of the clad layer (3) and two optical branch passages (2a, 2b) terminating in an end intersecting with said other end edge of the clad layer (3).

3. The device of claim 1 or 2, wherein said one end edge of the clad layer (3) is located to extend along the boundary between said first and second regions (5B, 5C), said device substrate (5) having formed in its surface a dicing groove (5e, 5d) extending along said boundary.

4. The device of claim 2, wherein said device substrate (5) has a third region (5A) adjoining said second region (5C) on the side opposite from said first region (5B), said third region having formed in its surface two V grooves (5a, 5b) extending from the end edge of said device substrate (5) opposite from said second region (5C) to a boundary between said second and third regions, and including two optical fibers (8a, 8b) having their end portions fitted and secured in said two V grooves with end faces of said two optical fibers in opposition to the spaced apart ends of said branch passages at said other end edge of the clad layer(3).

5. The device of claim 2, wherein said device substrate (5) has a third region (5A) adjoining said second region (5C) on the side opposite from said first region (5B), said third region having mounted thereon a light emitting element (9) in opposition to the spaced apart end of one of said two branch passages positioned at said other end edge of the clad layer (3).

6. The device of claim 5, wherein said third region has mounted thereon a light receiving element (15) in opposition to the spaced apart end of the other of said two branch passages positioned at said other end edge of the clad layer (3).

7. The device of claim 4, 5 or 6, wherein said device substrate (5) has formed in its surface another dicing groove (5d) extending along a boundary between said second and third regions.

8. The device of claim 2, wherein said clad layer (3) is formed so as to leave marginal areas on said optical waveguide substrate (10S) on the second end surface, and including a light emitting element (9) and a light receiving element (15) mounted on said marginal areas on said optical waveguide substrate (10S) in opposition to the spaced apart ends of said branch passages of said Y-branched optical waveguide path positioned at said other end edge of the clad layer (3).

9. The device of claim 1, 5 or 6, wherein said device substrate (5) has a third region (5A) adjoining said second region (5C) on the side opposite from said first region (5B), said third region having formed in its surface another V groove (5a) extending from the end edge of the device substrate (5) opposite from said second region (5C) to a boundary between said second and third regions, and including another optical fiber (8a) having its end portion fitted and secured in said another V groove (5a) with an end face of said another optical fiber in opposition to the other end of said first optical waveguide path.

10. The device of any one of claims 1, 2, 4, 5, and 6, wherein said optical waveguide (2) is formed of polymeric material.

11. The device of any one of claims 1, 2, 4, 5, and 6, wherein at least two of said alignment marks are formed in spaced relation to each other on each of the surfaces of said optical waveguide substrate (10S) and said device substrate (5).

12. The device of any one of claims 1, 2, 4, 5, and 6, wherein said optical waveguide substrate (10S) and said device substrate (5) each comprise a board of silicon single crystal.

13. The device of any one of claims 1, 2, 4, 5, and 6, further including metallic film lands formed on a plurality of opposed positions on the opposed surfaces of said optical waveguide substrate (10S) and said device substrate (5), and solder bumps formed on said metallic film lands for bonding the opposed metallic film lands.

14. The device of any one of claims 1, 2, 4, 5, and 6, wherein gaps between said optical waveguide substrate (10S) and said device substrate (5) are filled with resin.

15. A method of producing an optical waveguide device, comprising the steps of:
(a) forming a device substrate (5) having a first region (5B) and a second region (5C) defined on the top surface thereof, said first and second regions being arranged in side-by-side juxtaposition from one end of said device substrate (5), forming a V groove (5c) in said first region (5B) to extend from said one end of said device substrate (5) to a boundary between said first and second regions, and forming at least two first alignment marks (4a', 4b') at at least two spaced apart locations on the second region (5C);
(b) forming an optical waveguide chip (10) comprising an optical waveguide substrate (10S) having a first end surface (10a) and a second end surface (10b), forming a clad layer (3) over one side surface of said optical waveguide substrate (10S) so as to have one end edge flush with the first end surface of the optical waveguide substrate (10S), forming an optical waveguide (2) in said clad layer (3) to extend from said one end edge to the other end edge of the clad layer (3), and forming at least two second alignment marks (4a, 4b) on said optical waveguide substrate (10S) at at least two locations spaced from each other and spaced from said optical waveguide (2);
(c) disposing said optical waveguide chip (10) on said second region of said device substrate (5) with said clad layer side of the chip facing the device substrate (5);
(d) bonding said optical waveguide chip (10) and said device substrate (5) together with the alignment marks on said optical waveguide substrate (10S) in superposed registration with the alignment marks on said device substrate (5); and
(e) fitting and securing an end portion of an optical fiber (8) in said V groove (5c);
**characterized in that** step (b) comprises:
(b1) forming an under-clad layer (31) on an optical waveguide substrate (10S) composed of a silicon single crystal board;
(b2) forming an alignment mark-forming metallic film (32) on a predetermined location on a surface of said under-clad layer;
(b3) forming an optical waveguide-forming polymeric material layer (23) on the entire surface of said under-clad layer containing said alignment mark-forming metallic film;
(b4) forming an optical waveguide-forming pattern (2') and an alignment mark-forming pattern (4a", 4b") on a surface of said optical waveguide-forming polymeric material layer;
(b5) removing portions of said optical waveguide-forming polymeric material layer (23) other than those corresponding to the optical waveguide-forming pattern (27) by reactive ion etching technique using the optical waveguide-forming pattern (2') and the alignment mark-forming pattern (4a", 4b") as a mask;
(b6) removing said optical waveguide-forming pattern (2'), an alignment mark-forming pattern and exposed portions of said alignment mark-forming metallic film (4a", 4b"); and
(b7) forming an over-clad layer (31') on the entire surface of said under-clad layer (31) to thereby construct an optical waveguide chip (10);
wherein said optical waveguide (2) is formed to include a first optical waveguide path (2D) and a second optical waveguide path (2Y) extending from said one end edge toward said other end edge of the clad layer (3), said first and second optical waveguide paths being coupled together at said one end edge of the clad layer (3) into a coupled end which constitutes said one end of said optical waveguide (2), and a dielectric multi-layer film filter (14) is formed on the one end edge of the clad layer (3) so as to cover said coupled end, said dielectric multi-layer film filter (14) allowing passage of light of a first wavelength but reflecting light of a second wavelength, said one end edge of the clad layer (3) being at a right angle to a line bisecting an angle defined at the coupled end between said first and second optical waveguide paths.

16. The method of claim 15, wherein said step (b7) further includes the steps of:
(b7-1) forming a protective metallic film (33) on that area of the surface of said over-clad layer covering said optical waveguide (2); and
(b7-2) removing said over-clad layer (31') except that area thereof underlying said protective metallic film (33) by reactive ion etching technique to thereby expose said alignment marks (4a, 4b) and the surface of said optical waveguide substrate (10S).

## Patentansprüche

1. Optische Wellenleitervorrichtung mit
einem Vorrichtungssubstrat (5) mit einer an dessen oberer Oberfläche definierten ersten Region (5B) und zweiten Region (5C), wobei die erste und zweite Region Seite an Seite von einem Ende des Vorrichtungssubstrats (5) aus angeordnet sind, die erste Region (5B) mit einer V-Nut (5c) versehen ist, die sich von dem einen Ende des Vorrichtungssubstrats (5) zu einer Grenze zwischen der ersten und der zweiten Region erstreckt, und die zweite Region (5C) wenigstens zwei Ausrichtmarken (4a', 4b') hat, die an wenigstens zwei beabstandeten Orten auf der zweiten Region (5C) gebildet sind;
einem optischen Wellenleiterchip (10), der ein optisches Wellenleitersubstrat (10S) mit einer ersten Endoberfläche (10a) und einer zweiten Endoberfläche (10b), eine über einer Seitenoberfläche des optischen Wellenleitersubstrats (10S) gebildete Mantelschicht (3), von der eine Endkante bündig mit der ersten Endoberfläche des optischen Wellenleitersubstrats (10S) ist, einen in der Mantelschicht (3) gebildeten und sich von der einen Endkante zu der anderen Endkante der Mantelschicht (3) erstreckenden optischen Wellenleiter (2) und wenigstens zwei zweite Ausrichtmarken (4a, 4b) umfasst, die auf dem optischen Wellenleitersubstrat (10S) an wenigstens zwei voneinander und von dem optischen Wellenleiter (2) beabstandeten Orten gebildet sind; und
einer optischen Faser (8c), die in die V-Nut (5c) eingefügt und darin befestigt ist und an einem Ende abschließt, welches die Grenze zwischen der ersten und der zweiten Region schneidet, während das andere Ende über das Vorrichtungssubstrat (5) übersteht;
wobei der optische Wellenleiterchip (10) auf dem Vorrichtungssubstrat (5) so montiert ist, dass die Mantelschicht (3) auf der zweiten Region (5C) des Vorrichtungssubstrat (5) liegt, die Orte der ersten und zweiten Ausrichtmarken so definiert sind, dass durch einzeln Übereinanderlegen der ersten und zweiten Ausrichtmarken eine Endfläche der optischen Faser (8c) in eine Ausrichtung gegenüber einem Ende des optischen Wellenleiters (2) gelangt;
**dadurch gekennzeichnet, dass**
der optische Wellenleiter (2) einen ersten optischen Wellenleiterpfad (2D) und einen zweiten optischen Wellenleiterpfad (2Y), die sich von der einen Endkante zu der anderen Endkante der Mantelschicht (3) erstrecken, umfasst, wobei der erste und der zweite optische Wellenleiterpfad an der einen Endkante der Mantelschicht (3) zu einem gekoppelten Ende verkoppelt sind, welches das eine Ende des optischen Wellenleiters (2) bildet, der erste und der zweite optische Wellenleiterpfad andere von einander beabstandete und die andere Endkante der Mantelschicht (3) schneidende Enden haben, und dass ferner ein dielektrisches Vielschichtfilmfilter (14) an der einen Endkante der Mantelschicht (3) gebildet ist, um das gekoppelte Ende zu überdecken, wobei das dielektrische Vielschichtfilmfilter (14) den Durchgang von Licht einer ersten Wellenlänge zulässt, aber Licht einer zweiten Wellenlänge reflektiert, wobei die eine Endkante der Mantelschicht (3) im rechten Winkel zu einer Linie steht, die einen an dem gekoppelten Ende zwischen dem ersten und dem zweiten optischen Wellenleiterpfad definierten Winkel halbiert.

2. Vorrichtung nach Anspruch 1, bei der der zweite optische Wellenleiterpfad (2Y) als ein Y-förmig verzweigter optischer Wellenleiterpfad ausgebildet ist, der eine optische Zweigleitung (2c), die an einem die eine Endkante der Mantelschicht (3) schneidenden Ende abschließt, und zwei optische Zweigleitungen (2a, 2b) umfasst, die an einem die andere Endkante der Mantelschicht (3) schneidenden Ende abschließen.

3. Vorrichtung nach Anspruch 1 oder 2, bei der die eine Endkante der Mantelschicht (3) entlang der Grenze zwischen der ersten und der zweiten Region (5B, 5C) angeordnet ist und das Vorrichtungssubstrat (5) an seiner Oberfläche eine sich entlang der Grenze erstreckende Kerbnut (5e, 5d) aufweist.

4. Vorrichtung nach Anspruch 2, bei der das Vorrichtungssubstrat (5) eine dritte Region (5A) hat, die an die zweite Region (5C) auf der der ersten Region (5B) entgegengesetzten Seite angrenzt, die dritte Region an ihrer Oberfläche zwei V-Nuten (5a, 5b) aufweist, die sich von der der zweiten Region (5C) abgewandten Endkante des Vorrichtungssubstrats (5) zu einer Grenze zwischen der zweiten und der dritten Region erstrecken, und zwei optische Fasern (8a, 8b) umfasst, deren Endabschnitte in die zwei V-Nuten eingefügt und befestigt sind, wobei Endflächen der zwei optischen Fasern den beabstandeten Enden der Zweigleitungen an der anderen Endkante der Mantelschicht (3) gegenüberliegen.

5. Vorrichtung nach Anspruch 2, bei der das Vorrichtungssubstrat (5) eine dritte Region (5A) hat, die an die zweite Region (5C) auf der der ersten Region (5B) entgegengesetzten Seite angrenzt, wobei auf der dritten Region ein Licht emittierendes Element (9) gegenüber dem beabstandeten Ende einer der zwei an der anderen Endkante der Mantelschicht (3) positionierten Zweigleitungen montiert ist.

6. Vorrichtung nach Anspruch 5, bei der auf der dritten Region ein Licht empfangendes Element (15) gegenüber dem beabstandeten Ende der anderen der zwei an der anderen Endkante der Mantelschicht (3) positionierten Zweigleitungen montiert ist.

7. Vorrichtung nach Anspruch 4, 5 oder 6, bei der auf der Oberfläche des Vorrichtungssubstrats (5) eine andere Kerbnut (5d) gebildet ist, die sich entlang einer Grenze zwischen der zweiten und dritten Region erstreckt.

8. Vorrichtung nach Anspruch 2, bei der die Mantelschicht (3) geformt ist, um Randflächen auf den optischen Wellenleitersubstrat (10S) auf der zweiten Endoberfläche zu belassen, und ein Licht emittierendes Element (9) und ein Licht empfangendes Element (15) umfasst, die auf den Randflächen auf dem optischen Wellenleitersubstrat (10S) gegenüber den an der anderen Endkante der Mantelschicht (3) positionierten beabstandeten Enden der Zweigleitungen des Y-förmigen optischen Wellenleiterpfades montiert sind.

9. Vorrichtung nach Anspruch 1, 5 oder 6, bei der das Vorrichtungssubstrat (5) eine dritte Region (5A) hat, die an die zweite Region (5C) auf der der ersten Region (5B) entgegengesetzten Seite angrenzt, wobei in der Oberfläche der dritten Region eine andere V-Nut (5a) gebildet ist, die sich von der der zweiten Region (5C) entgegengesetzten Endkante des Vorrichtungssubstrats (5) zu einer Grenze zwischen der zweiten und der dritten Region erstreckt, und eine andere optische Faser (8a) umfasst, deren Endabschnitt in die andere V-Nut (5a) mit einer Endfläche besagter anderer optischer Faser gegenüber dem anderen Ende des ersten optischen Wellenleiterpfads eingefügt und befestigt ist.

10. Vorrichtung nach einem der Ansprüche 1, 2, 4, 5 und 6, bei der der optische Wellenleiter (2) aus Polymermaterial gebildet ist.

11. Vorrichtung nach einem der Ansprüche 1, 2, 4, 5 und 6, bei der wenigstens zwei der Ausrichtmarken zueinander beabstandet jeweils auf jeder der Oberflächen des optischen Wellenleitersubstrats (10S) und des Vorrichtungssubstrats (5) gebildet sind.

12. Vorrichtung nach einem der Ansprüche 1, 2, 4, 5 und 6, bei der das optische Wellenleitersubstrat (10S) und das Vorrichtungssubstrat (5) jeweils eine Platte aus Silizium-Einkristall umfassen.

13. Vorrichtung nach einem der Ansprüche 1, 2, 4, 5 und 6, ferner mit Metallfilm-Kontaktfeldern, die an einer Mehrzahl von entgegengesetzten Positionen an den entgegengesetzten Oberflächen des optischen Wellenleitersubstrats (10S) und des Vorrichtungssubstrats (5) gebildet sind, und auf den Metallfilm-Kontaktfeldern gebildeten Löthöckern zum Bonden der gegenüberliegenden Metallfilm-Kontaktfelder.

14. Vorrichtung nach einem der Ansprüche 1, 2, 4, 5 und 6, bei der Spalte zwischen dem optischen Wellenleitersubstrat (10S) und dem Vorrichtungssubstrat (5) mit Harz ausgefüllt sind.

15. Verfahren zum Erzeugen einer optischen Wellenleitervorrichtung mit den Schritten:
(a) Erzeugen eines Vorrichtungssubstrats (5) mit einer an dessen oberer Oberfläche definierten ersten Region (5B) und zweiten Region (5C), wobei die erste und die zweite Region Seite an Seite nebeneinander von einem Ende des Vorrichtungssubstrats (5) aus definiert sind, Erzeugen einer V-Nut (5c) in der ersten Region (5B), so dass sie sich von dem einen Ende des Vorrichtungssubstrats (5) zu einer Grenze zwischen der ersten und der zweiten Region erstreckt, und Erzeugen von wenigstens zwei Ausrichtmarken (4a', 4b') an wenigstens zwei beabstandeten Stellen auf der zweiten Region (5C);
(b) Erzeugen eines optischen Wellenleiterchips (10) mit einem optischen Wellenleitersubstrat (10S), das eine erste Endoberfläche (10a) und eine zweite Endoberfläche (10b) hat, Erzeugen einer Mantelschicht (3) über einer Seitenoberfläche des optischen Wellenleitersubstrats (10S), so dass eine Endkante bündig mit der ersten Endoberfläche des optischen Wellenleitersubstrats (10S) ist, Erzeugen eines optischen Wellenleiters (2) in der Mantelschicht (3), so dass dieser sich von der einen Endkante zu der anderen Endkante der Mantelschicht (3) erstreckt, und Erzeugen von wenigstens zwei zweiten Ausrichtmarken (4a, 4b) auf dem optischen Wellenleitersubstrat (10S) an wenigstens zwei voneinander beabstandeten und von dem optischen Wellenleiter (2) beabstandeten Orten;
(c) Anordnen des optischen Wellenleiterchips (10) auf der zweiten Region des Vorrichtungssubstrats (5), wobei die Mantelschichtseite des Chips dem Vorrichtungssubstrat (5) zugewandt ist;
(d) Verbinden des optischen Wellenleiterchips (10) und des Vorrichtungssubstrats (5) miteinander, wobei die Ausrichtmarken auf dem optischen Wellenleitersubstrat (10S) in Deckung mit den Ausrichtmarken auf dem Vorrichtungssubstrat (5) sind; und
(e) Anfügen und Befestigen eines Endabschnitts einer optischen Faser (8) in der V-Nut (5c);
**dadurch gekennzeichnet, dass** Schritt (b) umfasst:
(b1) Erzeugen einer Unter-Mantelschicht (31) auf einem aus einer Silizium-Einkristallplatte gebildeten optischen Wellenleitersubstrat (10S);
(b2) Erzeugen eines eine Ausrichtmarke bildenden Metallfilms (32) an einem vorgegebenen Ort an einer Oberfläche der Unter-Mantelschicht;
(b3) Erzeugen einer einen optischen Wellenleiter bildenden Polymermaterialschicht (23) auf der gesamten Oberfläche der Unter-Mantelschicht, die den die Ausrichtmarke bildenden Metallfilm enthält;
(b4) Erzeugen eines Musters (2') zum Erzeugen eines optischen Wellenleiters und eines Musters (4a", 4b") zum Erzeugen von Ausrichtmarken auf einer Oberfläche der Polymermaterialschicht zur Erzeugung des optischen Wellenleiters;
(b5) Entfernen von Bereichen der Polymermaterialschicht (23) mit Ausnahme von denjenigen, die dem optischen Wellenleitererzeugungsmuster (27) entsprechen, zur Erzeugung des optischen Wellenleiters durch Reaktiv-Ionenätztechnik unter Verwendung des optischen Wellenleitererzeugungsmusters (2') und des Ausrichtmarkenerzeugungsmusters (4a", 4b") als Maske;
(b6) Entfernen des Musters zur Erzeugung des optischen Wellenleiters (2'), eines Ausrichtmarkenerzeugungsmusters und von freiliegenden Bereichen des Ausrichtmarkenbildungs-Metallfilms (4a", 4b") und
(b7) Erzeugen einer Über-Mantelschicht (31') auf der gesamten Oberfläche der Unter-Mantelschicht (31), um **dadurch** einen optischen Wellenleiterchip (10) zu konstruieren;
wobei der optische Wellenleiter (2) geformt ist, um einen ersten optischen Wellenleiterpfad (2D) und einen zweiten optischen Wellenleiterpfad (2Y) zu umfassen, die sich von der einen Endkante zu der anderen Endkante der Mantelschicht (3) erstrecken, wobei der erste und der zweite optische Wellenleiterpfad miteinander an der einen Endkante der Mantelschicht (3) zu einem gekoppelten Ende verkoppelt sind, welches das eine Ende des optischen Wellenleiters (2) bildet, und ein dielektrischer Vielschichtfilmfilter (14) auf der einen Endkante der Mantelschicht (3) gebildet wird, um das gekoppelte Ende zu überdecken, wobei der dielektrische Vielschichtfilmfilter (14) den Durchgang von Licht einer ersten Wellenlänge zulässt, aber Licht einer zweiten Wellenlänge reflektiert, wobei das eine Ende der Mantelschicht (3) im rechten Winkel zu einer Linie steht, die einen an dem gekoppelte Ende zwischen dem ersten und dem zweiten optischen Wellenleiterpfad definierten Winkel halbiert.

16. Verfahren nach Anspruch 15, bei dem Schritt (b7) ferner folgende Schritte umfasst:
(b7-1) Erzeugen eines metallischen Schutzfilms (33) auf derjenigen Fläche der Oberfläche der Über-Mantelschicht, die den optischen Wellenleiter (2) bedeckt; und
(b7-2) Entfernen der Über-Mantelschicht (31') mit Ausnahme derjenigen Fläche derselben, die unter dem metallischen Schutzfilm (33) liegt, durch Reaktiv-Ionenätztechnik, um **dadurch** die Ausrichtmarken (4a, 4b) und die Oberfläche des optischen Wellenleitersubstrats (10S) freizulegen.

## Revendications

1. Dispositif à guide d'onde optique comprenant,
un substrat de dispositif (5) présentant une première région (5B) et une seconde région (5C) définies sur la surface supérieure de celui-ci, lesdites première et seconde régions étant agencées dans une juxtaposition côte-à-côte à partir d'une première extrémité dudit substrat de dispositif (5), ladite première région (5B) étant formée avec une rainure en V (5c) s'étendant depuis ladite première extrémité dudit substrat de dispositif (5) jusqu'à une limite entre lesdites première et seconde régions, et ladite seconde région (5C) comportant au moins deux premiers repères d'alignement (4a', 4b') formés au niveau d'au moins deux emplacements séparés sur la seconde région (5C),
une puce à guide d'onde optique (10) comprenant un substrat de guide d'onde optique (10S) présentant une première surface d'extrémité (10a) et une seconde surface d'extrémité (10b), une couche de gainage (3) formée sur une première surface latérale dudit substrat de guide d'onde optique (10S) et ayant un premier bord d'extrémité de niveau avec la première surface d'extrémité du substrat de guide d'onde optique (10S), un guide d'onde optique (2) formé dans ladite couche de gainage (3) et s'étendant depuis ledit premier bord d'extrémité jusqu'à l'autre bord d'extrémité de la couche de gainage (3), et au moins deux seconds repères d'alignement (4a, 4b) formés sur ledit substrat de guide d'onde (10S) au niveau d'au moins deux emplacements espacés l'un de l'autre et espacés dudit guide d'onde optique (2), et
une fibre optique (8c) montée et fixée dans ladite rainure en V (5c) et se terminant dans une première extrémité se coupant avec ladite limite entre lesdites première et seconde régions avec l'autre extrémité dépassant dudit substrat de dispositif (5),
où ladite puce à guide d'onde optique (10) est montée sur ledit substrat de dispositif (5) de sorte que ladite couche de gainage (3) repose sur la seconde région (5C) dudit substrat de dispositif (5), les emplacements desdits premier et second repères d'alignement étant définis de sorte que la superposition des premier et second repères d'alignement l'un sur l'autre placera une première face d'extrémité de ladite fibre optique (8c) en alignement opposé avec une première extrémité dudit guide d'onde optique (2),
**caractérisé en ce que** :
lorsque ledit guide d'onde optique (2) comprend un premier trajet de guide d'onde optique (2D) et un second trajet de guide d'onde optique (2Y) s'étendant depuis ledit premier bord d'extrémité vers ledit autre bord d'extrémité de la couche de gainage (3), lesdits premier et second trajets de guide d'onde optique étant couplés ensemble au niveau dudit premier bord d'extrémité de la couche de gainage (3) dans une extrémité couplée qui constitue ladite première extrémité dudit guide d'onde optique (2), lesdits premier et second trajets de guide d'onde optique présentant d'autres extrémités espacées les unes des autres et se coupant avec ledit autre bord d'extrémité de la couche de gainage (3), et comprenant en outre un filtre à film multicouche diélectrique (14) formé sur le premier bord d'extrémité de la couche de gainage (3) de manière à recouvrir ladite extrémité couplée, ledit filtre à film multicouche diélectrique (14) permettant le passage de la lumière présentant une première longueur d'onde mais réfléchissant la lumière présentant une seconde longueur d'onde, ledit premier bord d'extrémité de la couche de gainage (3) étant à un angle droit par rapport à une ligne bissectrice d'un angle défini au niveau de l'extrémité couplée entre lesdits premier et second trajets de guide d'onde optique.

2. Dispositif selon la revendication 1, dans lequel ledit second trajet de guide d'onde optique (2Y) est formé sous la forme d'un trajet de guide d'onde optique ramifié en Y comprenant un passage de dérivation optique (2c) se terminant dans une extrémité se coupant avec ledit premier bord d'extrémité de la couche de gainage (3) et deux passages de dérivation optiques (2a, 2b) se terminant en une extrémité se coupant avec ledit autre bord d'extrémité de la couche de gainage (3).

3. Dispositif selon la revendication 1 ou 2, dans lequel ledit premier bord d'extrémité de la couche de gainage (3) est situé pour s'étendre le long de la limite entre lesdites première et seconde régions (5B, 5C), ledit substrat de dispositif (5) ayant, formé dans sa surface, une rainure de découpe (5e, 5d) s'étendant le long de ladite limite.

4. Dispositif selon la revendication 2, dans lequel ledit substrat de dispositif (5) présente une troisième région (5A) qui est contiguë à ladite seconde région (5C) du côté opposé par rapport à ladite première région (5B), ladite troisième région ayant, formé dans sa surface, deux rainures en V (5a, 5b) qui s'étendent depuis le bord d'extrémité dudit substrat de dispositif (5) en face de ladite seconde région (5C) jusqu'à une limite entre lesdites seconde et troisième régions, et comprenant deux fibres optiques (8a, 8b) qui ont leurs parties d'extrémité montées et fixées dans lesdites deux rainures en V, les faces d'extrémité desdites deux fibres optiques étant opposées aux extrémités espacées desdits passages de dérivation au niveau de l'autre bord d'extrémité de la couche de gainage (3).

5. Dispositif selon la revendication 2, dans lequel ledit substrat de dispositif (5) présente une troisième région (5A) qui est contiguë à une seconde région (5C) du côté opposé par rapport à ladite première région (5B), ladite troisième région ayant, monté sur celle-ci, un élément émettant de la lumière (9) opposé à l'extrémité espacée de l'un desdits deux passages de dérivation positionnés au niveau dudit autre bord d'extrémité de la couche de gainage (3).

6. Dispositif selon la revendication 5, dans lequel ladite troisième région comporte monté sur celle-ci un élément recevant de la lumière (15) opposé à l'extrémité espacée de l'autre desdits deux passages de dérivation positionnés au niveau dudit autre bord d'extrémité de la couche de gainage (3).

7. Dispositif selon la revendication 4, 5 ou 6, dans lequel ledit substrat de dispositif (5) comporte, formée dans sa surface, une autre rainure de découpe (5d) qui s'étend le long d'une limite entre lesdites seconde et troisième régions.

8. Dispositif selon la revendication 2, dans lequel ladite couche de gainage (3) est formée de manière à laisser des zones marginales sur ledit substrat de guide d'onde optique (10S) sur la seconde surface d'extrémité, et comprenant un élément émettant de la lumière (9) et un élément recevant de la lumière (15) montés sur lesdites zones marginales dudit substrat de guide d'onde optique (10S) de manière opposée aux extrémités espacées desdits passages de dérivation dudit trajet de guide d'onde optique ramifié en Y positionnés au niveau dudit autre bord d'extrémité de la couche de gainage (3).

9. Dispositif selon la revendication 1, 5 ou 6, dans lequel ledit substrat de dispositif (5) comporte une troisième région (5A) qui est contiguë à ladite seconde région (5C) sur le côté opposé par rapport à ladite première région (5B), ladite troisième région présentant formée dans sa surface une autre rainure en V (5a) s'étendant depuis le bord d'extrémité du substrat de dispositif (5) de manière opposée par rapport à ladite seconde région (5C) jusqu'à une limite entre lesdites seconde et troisième régions, et comprenant une autre fibre optique (8a) ayant sa partie d'extrémité montée et fixée dans ladite autre rainure en V (5a), une face d'extrémité de ladite autre fibre optique étant opposée à l'autre extrémité dudit premier trajet de guide d'onde optique.

10. Dispositif selon l'une quelconque des revendications 1, 2, 4, 5, et 6, dans lequel ledit guide d'onde optique (2) est formé d'un matériau polymère.

11. Dispositif selon l'une quelconque des revendications 1, 2, 4, 5, et 6, dans lequel au moins deux desdits repères d'alignement sont formés en relation espacée l'un par rapport à l'autre sur chacune des surfaces dudit substrat de guide d'onde optique (10S) et dudit substrat de dispositif (5).

12. Dispositif selon l'une quelconque des revendications 1, 2, 4, 5, et 6, dans lequel ledit substrat de guide d'onde optique (10S) et ledit substrat de dispositif (5) comprennent chacun une carte d'un monocristal de silicium.

13. Dispositif selon l'une quelconque des revendications 1, 2, 4, 5, et 6, comprenant en outre des plages de film métallique formées sur une pluralité de positions opposées sur les surfaces opposées dudit substrat de guide d'onde optique (10S) et ledit substrat de dispositif (5), et les bosses de soudures formées sur lesdites plages de film métallique pour lier les plages de film métallique opposées.

14. Dispositif selon l'une quelconque des revendications 1, 2, 4, 5, et 6, dans lequel les intervalles entre ledit substrat de guide d'onde optique (10S) et ledit substrat de dispositif (5) sont remplis de résine.

15. Procédé de fabrication d'un dispositif de guide d'onde optique comprenant les étapes consistant à :
(a) former un substrat de dispositif (5) présentant une première région (5B) et une seconde région (5C) définies sur la surface supérieure de celui-ci, lesdites première et seconde régions étant agencées dans une juxtaposition côte-à-côte depuis une extrémité dudit substrat de dispositif (5), former une rainure en V (5c) dans ladite première région (5B) pour s'étendre depuis ladite première extrémité dudit substrat de dispositif (5) jusqu'à une limite entre lesdites première et seconde régions, et former au moins deux premiers repères d'alignement (4a', 4b') au niveau d'au moins deux emplacements espacés sur la seconde région (5C),
(b) former une puce à guide d'onde optique (10) comprenant un substrat de guide d'onde optique (10S) comportant une première surface d'extrémité (10a) et une seconde surface d'extrémité (10b), former une couche de gainage (3) sur une première surface latérale dudit substrat de guide d'onde optique (10S) de manière à avoir un premier bord d'extrémité de niveau avec la première surface d'extrémité du substrat de guide d'onde optique (10S), former un guide d'onde optique (2) dans ladite couche de gainage (3) et afin qu'il s'étende depuis ledit premier bord d'extrémité jusqu'à l'autre bord d'extrémité de la couche de gainage (3), et former au moins deux seconds repères d'alignement (4a, 4b) sur ledit substrat de guide d'onde (10S) au niveau d'au moins deux emplacements espacés l'un de l'autre et espacés dudit guide d'onde optique (2),
(c) disposer ladite puce de guide d'onde optique (10) sur ladite seconde région dudit substrat de dispositif (5), ledit côté de couche de gainage de la puce faisant face au substrat de dispositif (5),
(d) relier ladite puce de guide d'onde optique (10) et ledit substrat de dispositif (5) ensemble, les repères d'alignement sur ledit substrat de guide d'onde optique (10S) étant en alignement superposé avec les repères d'alignement sur ledit substrat de dispositif (5), et
(e) monter et fixer une partie d'extrémité d'une fibre optique (8) dans ladite rainure en V (5c),
**caractérisé en ce que** l'étape (b) comprend :
(b1) la formation d'une sous-couché de gainage (31) sur un substrat de guide d'onde optique (10S) constitué d'une carte en monocristal de silicium,
(b2) former un film métallique formant un repère d'alignement (32) sur un emplacement prédéterminé sur une surface de ladite sous-couche de gainage,
(b3) former une couche de matériau polymère formant un guide d'onde optique (23) sur la surface entière de ladite sous-couche de gainage contenant ledit film métallique formant un repère d'alignement,
(b4) former un motif formant un guide d'onde optique (2') et un motif formant des repères d'alignement (4a", 4b") sur une surface de ladite couche de matériau polymère formant un guide d'onde optique,
(b5) éliminer les parties de ladite couche de matériau polymère formant un guide d'onde optique (23) autres que celles correspondant au motif formant un guide d'onde optique (27) par une technique de gravure ionique réactive en utilisant le motif formant un guide d'onde optique (2') et le motif formant des repères d'alignement (4a", 4b") comme masque,
(b6) éliminer ledit motif formant un guide d'onde optique (2'), un motif formant un repère d'alignement et des parties exposées d'un film métallique formant des repères d'alignement (4a", 4b"), et
(b7) former une sur-couche de gainage (31') sur la surface entière de ladite sous-couche de gainage (31) pour constituer ainsi une puce à guide d'onde optique (10),
où ledit guide d'onde optique (2) est formé pour comprendre un premier trajet de guide d'onde optique (2D) et un second trajet de guide d'onde optique (2Y) s'étendant depuis le premier bord d'extrémité vers ledit autre bord d'extrémité de la couche de gainage (3), lesdits premier et second trajets de guide d'onde optique étant couplés ensemble au niveau dudit premier bord d'extrémité de la couche de gainage (3) en une extrémité couplée qui constitue ladite première extrémité dudit guide d'onde optique (2), et un filtre à film multicouche diélectrique (14) est formé sur le premier bord d'extrémité de la couche de gainage (3) de manière à recouvrir ladite extrémité couplée, ledit filtre à film multicouche diélectrique (14) permettant le passage d'une lumière présentant une première longueur d'onde mais réfléchissant une lumière d'une seconde longueur d'onde, ledit premier bord d'extrémité de la couche de gainage (3) étant à un angle droit par rapport à une ligne bissectrice d'un angle défini au niveau de l'extrémité couplée entre lesdits premier et second trajets de guide d'onde optique.

16. Procédé selon la revendication 15, dans lequel ladite étape (b7) comprend en outre les étapes consistant à :
(b7-1) former un film métallique protecteur (33) sur cette zone de la surface de ladite sur-couche de gainage recouvrant ledit guide d'onde optique (2), et
(b7-2) éliminer ladite sur-couche de gainage (31') à l'exception de la zone de celle-ci qui est sous-jacente audit film métallique protecteur (33) par le biais d'une technique de gravure ionique réactive pour exposer ainsi lesdits repères d'alignement (4a, 4b) et la surface dudit substrat de guide d'onde optique (10S).
